# DEMANDE DE BREVET EUROPEEN

(11) **EP 0 577 454 A2**
(43) Date de publication de la demande: **05.01.1994**
(21) Numéro de dépôt: 93401523.1
(22) Date de dépôt: 14.06.1993
(51) Int. Cl.: G01M 3/36, G01M 3/32

(54) **Dispositif de contrôle de l'étanchéité de récipients fermés par un opercule**

(30) Priorité: 30.06.1992 FR 9208039
(71) Demandeur: REMY EQUIPEMENT, F-28104 Dreux (FR)
(72) Inventeur: Dronet, Jean-Marc, F-61210 Neuvy-Au-Houlme (FR)
(74) Mandataire: Polus, Camille

(57) **Abrégé**

L'invention a pour objet un dispositif (2) de contrôle de l'étanchéité d'au moins un récipient (4) fermé par un opercule (6) ou analogue scellé ou soudé sur le récipient, du type délimitant une chambre reliée à une source de vide et recevant ledit au moins un récipient, la chambre comportant des moyens de contrôle (46, 58) de la déformation de l'opercule (6) provoquée par la mise sous vide de la chambre. La chambre est délimitée par une plaque (12) ayant au moins un alésage traversant (10) à travers lequel un récipient (4) est supporté, et intercalable entre un premier (14) et un second (16) éléments creux reliés à la source de vide et disposés de part et d'autre de la plaque (12), le dispositif comportant des moyens de déplacement (28, 66) des éléments creux perpendiculairement à la plaque entre une position d'ouverture dans laquelle les éléments creux sont écartés l'un par rapport à l'autre d'une distance au moins égale à la hauteur du récipient et une position de fermeture dans laquelle ils sont en appui étanche contre la plaque.

## Description

La présente invention concerne un dispositif de contrôle de l'étanchéité de récipients fermés par un opercule ou analogue, scellé ou soudé sur le corps du récipient.

Ce contrôle est important, notamment pour les récipients contenant des produits alimentaires tels que yaourts, alimentés caillés ou autres produits laitiers qui deviennent impropres à la consommation lorsque l'étanchéité est insuffisante et permet l'introduction d'air dans le récipient.

On connaît un processus de contrôle de l'étanchéité d'un récipient tel que décrit ci-dessus, utilisant une chambre à vide.

Un récipient est introduit dans une chambre qui est ensuite fermée de manière étanche et mise sous vide.

Lors de la mise sous vide l'opercule se déforme vers l'extérieur du récipient par rapport au bord de scellement ou de soudage.

Si l'étanchéité est réalisée entre l'opercule et le corps du récipient, l'opercule se déforme d'une valeur prédéterminée, fonction du vide, perpendiculairement au bord de scellement ou de soudage. Si l'étanchéité n'est pas réalisée, l'opercule ne se déforme pas ou se déforme insuffisamment pour atteindre ladite valeur prédéterminée.

En contrôlant la valeur de la déformation de l'opercule dans la direction perpendiculaire au bord de scellement ou de soudage, on détecte les récipients non étanches.

Jusqu'alors un tel processus n'est mis en oeuvre qu'à titre de contrôle dans un laboratoire, par exemple par extraction d'un récipient au sein d'un lot et contrôle de ce récipient.

Dans un tel processus, on utilise une chambre à vide constituée d'un corps relié à une source de vide et d'un couvercle.

Lors d'un contrôle, le couvercle est enlevé, un récipient est introduit, on referme ensuite le couvercle et on fait le vide.

Des moyens de mesure de la déformation de l'opercule sont fixés sur le couvercle de la chambre, de manière à être situés en vis-à-vis de l'opercule.

Un tel dispositif ne permet pas une industrialisation du procédé de contrôle.

Pour remédier à cet inconvénient, la présente invention a pour but de fournir un dispositif de contrôle de l'étanchéité de la fermeture d'un récipient, dans lequel le récipient est reçu dans une chambre qui est mise sous vide, le dispositif pouvant être utilisé de manière industrielle.

A cet effet, la présente invention a pour objet un dispositif de contrôle de l'étanchéité d'au moins un récipient fermé par un opercule ou analogue scellé ou soudé sur le récipient, du type délimitant une chambre reliée à une source de vide et recevant ledit au moins un récipient, la chambre comportant des moyens de contrôle de la déformation de l'opercule provoquée par la mise sous vide de la chambre, caractérisé en ce que la chambre est délimitée par une plaque ayant au moins un alésage traversant à travers lequel un récipient est supporté, et intercalable entre un premier et un second éléments creux reliés à la source de vide et disposés de part et d'autre de la plaque, le dispositif comportant des moyens de déplacement des éléments creux perpendiculairement à la plaque entre une position d'ouverture dans laquelle les éléments creux sont écartés l'un par rapport à l'autre d'une distance au moins égale à la hauteur du récipient et une position de fermeture dans laquelle ils sont en appui étanche contre la plaque.

Selon d'autres caractéristiques :
- la plaque est horizontale et le premier élément creux est situé sous la plaque et délimite une cavité communiquant avec la source de vide et destinée à recevoir la partie de récipient faisant saillie sous la plaque, et les moyens de contrôle de la déformation de l'opercule sont agencés dans le second élément creux,
- les moyens de contrôle sont constitués d'un piston dont la tête comporte une face d'extrémité en appui sur l'opercule et déplaçable lors de la déformation de ce dernier en direction d'un contacteur électrique relié à un indicateur de l'état du contacteur,
- le piston et le contacteur sont écartés l'un par rapport à l'autre dans la direction de déplacement du piston, d'une distance prédéterminée correspondant à la déformation de l'opercule d'un récipient étanche dans ladite direction, provoquée par la mise sous vide,
- la plaque comporte plusieurs alésages et le second élément creux comporte plusieurs moyens de contrôle agencés chacun en vis-à-vis d'un alésage,
- la plaque est une plaque de convoyeur se déplaçant pas à pas perpendiculairement au sens de déplacement des éléments creux.

L'invention sera mieux comprise à la lecture de la description détaillée qui va suivre, faite en référence aux dessins annexés sur lesquels :
- La figure 1 est une vue en coupe d'un dispositif selon l'invention, les éléments creux étant dans leur position d'ouverture ;
- La figure 2 est une vue analogue à la figure 1, les éléments creux étant dans leur position de fermeture et le vide étant fait dans la chambre.

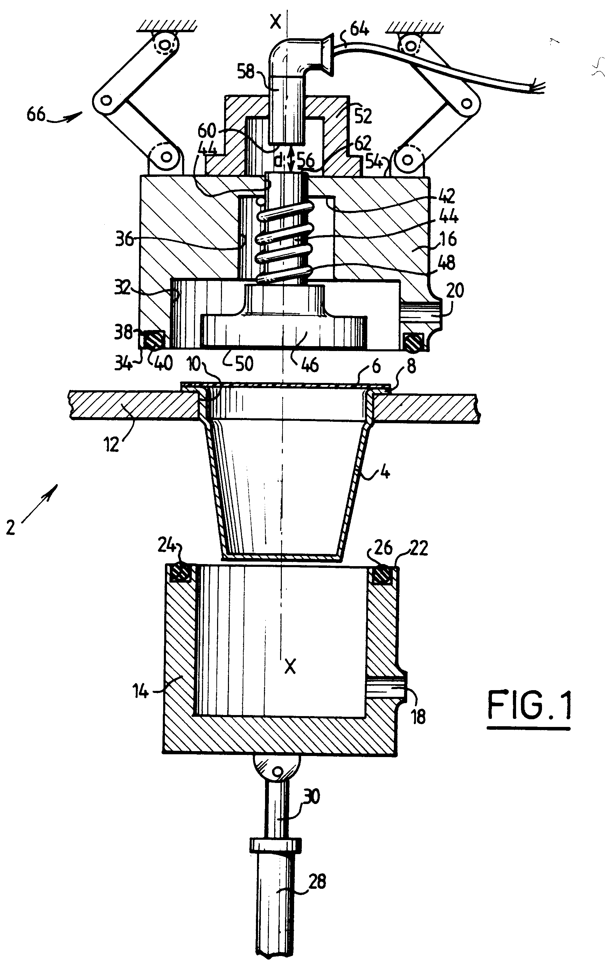

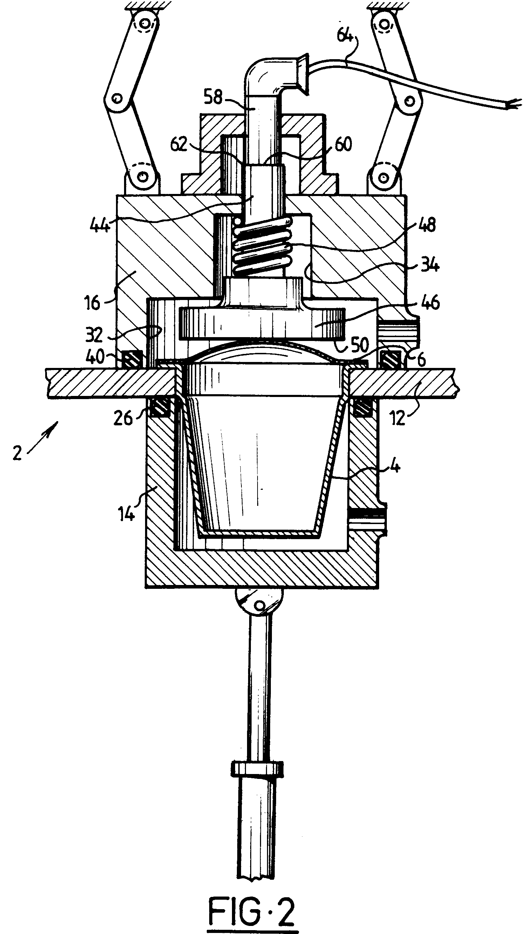

Sur les figures 1 et 2, on a représenté un dispositif de contrôle de l'étanchéité d'un récipient 4 fermé par un opercule 6 scellé.

Le récipient 4 est un pot de yaourt en matière plastique, supporté par un rebord radial 8 à travers un alésage traversant 10 d'axe vertical X-X d'une plaque support 12.

Selon l'invention, le dispositif 2 comporte un premier et un second éléments creux 14, 16, respectivement, agencés de part et d'autre de la plaque 12.

Chaque élément creux comporte un orifice 18, 20, respectivement destiné à faire communiquer l'intérieur de chaque élément creux à une source de vide (non représentée).

La plaque 12 est horizontale et le premier élément creux 14 est situé sous la plaque 12.

L'intérieur du premier élément 14 délimite un logement adapté pour recevoir la partie de récipient 4 faisant saillie sous la plaque 12.

Le premier élément 14 comporte une face d'extrémité supérieure 22 dans laquelle est agencée une gorge circulaire 24 d'axe X-X dans laquelle est disposé un joint torique faisant partiellement saillie à l'extérieur de la gorge.

Sous le premier élément 14 sont agencés des moyens de déplacement verticaux du premier élément, constitués d'un vérin 28 ayant une tige mobile 30 d'axe X-X fixée sur la face inférieure du premier élément 14.

Le second élément creux 16 comporte un logement étagé d'axe X-X, ayant un premier étage 32 de grand diamètre débouchant sur la face d'extrémité inférieure plane 34 du second élément, et un second étage 36 de diamètre plus petit.

Le diamètre du premier étage 32 est plus grand que le diamètre du rebord radial 8 du récipient 4.

La face 34 est pourvue d'une gorge 38 circulaire d'axe X-X dans laquelle est agencé un joint torique 40 faisant partiellement saillie à l'extérieur de la gorge 38.

La paroi 42, formant fond du second étage 34, comporte un trou traversant 44 dans lequel est montée coulissante l'extrémité supérieure d'une tige 44 d'un piston ayant une tête 46 située dans le premier étage 32 du logement.

Un ressort de rappel 48 est agencé entre la paroi 44 et la tête 46 de piston, de manière qu'en position inactive, la face 50 d'extrémité inférieure de la tête 46 soit située dans le plan de la face 34 du second élément 16.

La face 50 est une face plane circulaire d'axe X-X dont le diamètre est sensiblement égal au diamètre de l'ouverture du récipient 4.

Un capot 52 est fixé de manière étanche sur la face d'extrémité supérieure 54 du second élément 16, de manière à délimiter un logement 56 d'axe X-X et de plus grand diamètre de celui du trou 44.

Un contacteur électrique 58 d'axe X-X est fixé de manière étanche à travers le capot 52.

Le contacteur 58 comporte une face d'extrémité inférieure 60 radiale située en vis-à-vis de la face radiale 62 d'extrémité de la tige 44 de piston et écartée axialement par rapport à celle-ci d'une distance prédéterminée d.

Le contacteur 58 est relié par un câble 64 à une source de courant et à un indicateur de l'état du contacteur (non représentés).

Le contacteur 58 et le piston constituent les moyens de contrôle de l'étanchéité du récipient fermé.

Le dispositif comporte des moyens de déplacement 66 du second élément 16 le long de l'axe X-X, représentés schématiquement sur les figures 1 et 2.

Le vérin 28 et les moyens 66 permettent le déplacement du premier et du second éléments 14, 16 en direction de l'axe X-X, entre une position d'ouverture dans laquelle l'écartement entre les faces 22 et 34 est au moins égal à la hauteur du récipient 4 (voir figure 1)à et une position de fermeture dans laquelle ils sont en appui étanche de part et d'autre de la plaque 12 (voir figure 2).

Lorsque les deux éléments 14 et 16 sont en position d'ouverture la plaque 12 supportant un récipient 4 peut être intercalée entre les éléments par translation perpendiculairement à la direction de déplacement des éléments, pour positionner le récipient 4 par rapport aux éléments.

Lorsqu'un récipient 4 est positionné coaxialement à l'axe X-X entre les deux éléments 14 et 16 (voir figure 1), on actionne le vérin 28 et les moyens de déplacement 66 de manière à ce que le premier et le second éléments creux viennent en contact étanche avec la plaque 12, de part et d'autre de celle-ci.

L'étanchéité des contacts est assurée par les joints toriques 26 et 40 (voir figure 2).

On obtient ainsi une chambre reliée à la source de vide et recevant le récipient 4.

Lors du déplacement du second élément creux 16, la face 50 de la tête 46 de piston vient en contact avec l'opercule 6, puis est légèrement repoussée vers l'intérieur du premier étage 32.

Le vide et ensuite fait dans la chambre par l'intermédiaire des orifices 18 et 20.

Sous l'effet du vide créé, l'opercule 6, lorsqu'il est scellé de manière étanche, se déforme en prenant une forme de calotte sphérique située dans le premier étage 32.

Lors de cette déformation, l'opercule 6 déplace la tête 46 et la tige 44 du piston vers le haut à l'encontre du ressort 48, de manière telle que la face 62 de la tige 44 vient au contact de la face 60 du contacteur 68, ce qui ferme le circuit électrique auquel est relié le contacteur 58.

La fermeture du circuit électrique provoque l'actionnement de l'indicateur d'état du contacteur (non représenté), ce qui signifie que la fermeture du récipient 4 est correcte.

Dans le cas où la fermeture du récipient 4 est incorrecte, c'est-à-dire non parfaitement étanche, la déformation de l'opercule est inexistante ou insuffisante pour amener la face 62 de la tige 44 en contact avec la face 60 du contacteur 58 et pour fermer le circuit électrique.

Dans ce cas, l'indicateur n'est pas actionné, ce qui signifie que la fermeture du récipient 4 est incorrecte.

Il est à noter que l'indicateur peut être du type lumineux ou sonore ou de tout autre type.

On a ainsi réalisé un dispositif simple de contrôle de l'étanchéité d'un récipient, pouvant être utilisé industriellement.

A cet effet, il est préférable que la plaque comporte plusieurs alésages, le second élément creux comportant plusieurs moyens de contrôle agencés chacun en vis-à-vis d'un alésage.

De préférence, dans un tel cas, la plaque 12 est un élément d'un convoyeur à plaque dont le déplacement pas à pas s'effectue dans une direction perpendiculaire à la direction de déplacement des éléments creux, l'actionnement du convoyeur étant synchronisé avec le fonctionnement du dispositif 2.

## Revendications

**1.-** Dispositif (2) de contrôle de l'étanchéité d'au moins un récipient (4) fermé par un opercule (6) ou analogue scellé ou soudé sur le récipient, du type délimitant une chambre reliée à une source de vide et recevant ledit au moins un récipient, la chambre comportant des moyens de contrôle (46, 58) de la déformation de l'opercule (6) provoquée par la mise sous vide de la chambre, caractérisé en ce que la chambre est délimitée par une plaque (12) ayant au moins un alésage traversant (10) à travers lequel un récipient (4) est supporté, et intercalable entre un premier (14) et un second (16) éléments creux reliés à la source de vide et disposés de part et d'autre de la plaque (12), le dispositif comportant des moyens de déplacement (28, 66) des éléments creux perpendiculairement à la plaque entre une position d'ouverture dans laquelle les éléments creux sont écartés l'un par rapport à l'autre d'une distance au moins égale à la hauteur du récipient et une position de fermeture dans laquelle ils sont en appui étanche contre la plaque.

**2.-** Dispositif de contrôle de l'étanchéité selon la revendication 1, caractérisé en ce que la plaque (12) est horizontale et le premier élément creux (14) est situé sous la plaque et délimite une cavité communiquant avec la source de vide et destinée à recevoir la partie de récipient (4) faisant saillie sous la plaque, et les moyens de contrôle (28, 66) de la déformation de l'opercule sont agencés dans le second élément creux.

**3.-** Dispositif de contrôle de l'étanchéité selon la revendication 1 ou 2, caractérisé en ce que les moyens de contrôle sont constitués d'un piston dont la tête (46) comporte une face d'extrémité (50) en appui sur l'opercule (6) et déplaçable lors de la déformation de ce dernier en direction d'un contacteur électrique (58) relié à un indicateur de l'état du contacteur.

**4.-** Dispositif de contrôle de l'étanchéité selon la revendication 3, caractérisé en ce que le piston et le contacteur (58) sont écartés l'un par rapport à l'autre dans la direction de déplacement du piston, d'une distance prédéterminée (d) correspondant à la déformation de l'opercule d'un récipient étanche dans ladite direction, provoquée par la mise sous vide.

**5.-** Dispositif de contrôle de l'étanchéité selon l'une quelconque des revendications 1 à 4, caractérisé en ce que la plaque (12) comporte plusieurs alésages et le second élément creux (16) comporte plusieurs moyens de contrôle agencés chacun en vis-à-vis d'un alésage.

**6.-** Dispositif de contrôle de l'étanchéité selon l'une quelconque des revendications 1 à 5, caractérisé en ce que la plaque (12) est une plaque de convoyeur se déplaçant pas à pas perpendiculairement au sens de déplacement des éléments creux (14, 16).
